# EUROPEAN PATENT APPLICATION

(11) **EP 1 420 380 A1**
(43) Date of publication of application: **19.05.2004**
(21) Application number: 02380236.6
(22) Date of filing: 18.11.2002
(51) Int. Cl.: G08G 1/0968

(54) **Navigation device and method**

(71) Applicant: Owasys Advanced Wireless Devices, S.L.L., 48170 Zamudio, Vizcaya (ES)
(72) Inventor: Aguirre de Miguel, Fernando, 48993 Getxo (Vizcaya) (ES)
(74) Representative: Davila Baz, Angel

(57) **Abstract**

The invention is related to a navigation device that comprises means (1) for obtaining information regarding a geographical location of the device and communication means that include means (3) for radio communication with a mobile telephone (100) of a user, means (4) for sending the information configured to send to a remote centre (500), as a response to an activation action, the information regarding geographical location, through said means (3) for radio communication and through said mobile telephone (100) and means (5) to establish, as a response to an activation action, a voice channel with the remote centre, through said means (3) for radio communication and through said mobile telephone (100).

The invention is also related to a vehicle with a navigation device and to a navigation method.

## Description

### FIELD OF THE INVENTION

The invention relates to the field of navigation and implies the use of telecommunications. In the field of the telecommunications, English expressions and acronyms based on said expressions are frequently used. Below we can find an explanation for some of those acronyms, expressions and terms:
Bluetooth: short range radio standard in the 2.4 GHz ISM band (Industrial, Scientific, Medical) ("Bluetooth" is a registered trademark property of Bluetooth SIG, Inc.).
ISM Bands (ISM: "Industrial, Scientific, Medical"): some frequency bands opened to be freely operated without any special permission, aimed for short range radio communication or with low output power radio transmission, usually lower than 100 mW. Those frequencies can be, for example: 2.4 GHz and 5.8 GHz.
GPRS: General Packet Radio Service (packet mode data transmission service, overlaid to the GSM network infrastructure)
IP: Internet Protocol (protocol for transmission in packet mode networks)
SM: Short Message
SMS: Short Message Service
USSD: Unstructured Supplementary Service Data (allows transmission and reception of character strings through GSM networks, aimed to provide new non standardised services)
GPS: Global Positioning System (global positioning system operated by the Department of Defence of the United States of America)
GALILEO: future satellite based global navegation system promoted by the European Commission
GLONASS: a Russian global navigation system.

### PRIOR ART

The invention is related to the navigation systems, where a navigation system is understood as a system that:
1) by means of a geographical location system, such as those based on satellite constellations (GPS, GALILEO, etc.), obtains the geographical position (either in spherical co-ordinates or any other reference system) where one or more users (either humans or machines) are located at a certain moment; and
2) according to that obtained geographical position information, informs the user or proposes to the user a specific action to be performed. Usually, said action is related to vehicular traffic in the sea, in a town, a road, etc.

A typical example is that of the navigators for cars. Usually, said navigators are dashboard mounted devices that obtain the co-ordinates via a GPS module and show on a monitor the position where the car is located in that moment and the route to be followed in order to reach a certain destination. The route can be shown by means of a map displayed on the monitor or by means of direction vectors to be followed while the car is moving. Optionally, these devices can incorporate inertial sensors, such as accelerometers, gyroscopes, etc.

The cartographic information used to provide the information can be permanently stored in the device or, alternatively, it can be obtained from a remote server by means of a telecommunication system able to access the remote server and update the geographical information according to the position where the car is located. Usually, said telecommunication device is based on mobile cellular technology, as the car is in continuous movement.

The invention is related to this sort of navigation systems, that is, to those navigation systems that would require access to a remote information source in order to be able to obtain, according to their instantaneous location, information regarding the optimum route to follow for some particular purpose (to reach an unknown location, to avoid traffic jams, etc.).

There are already commercial navigation systems available on the market with the ability to communicate with remote centres. All of them provide the navigation service by means of any of the options listed below (in what regards the fundamental variables I-IV of the system):
I) Positioning system: a) Global Positioning System (GPS); b) others.
II) Way of informing about the optimum route: a) on a monitor, either by means of a map of by means of direction vectors (arrows); b) by means of local voice synthesis.
III) Way of obtaining the geographical information from a remote centre: a) a data communication is established and the whole cartography of a certain region is obtained; b) alternatively, only a route (direction vector, co-ordinate) to the predefined destination can be obtained; c) periodically, the complete cartographic information of a very extensive territory is updated by means of a data communication.
IV) Way of communication with the remote centre: a) by means of a cellular radio communication system (GSM or others) integrated in the navigation device.

The known systems do present, *inter alia,* the following problems, all of them related to the previously mentioned variables:
* *Problems related to the way of informing about the optimum route:*
   - Should the route be provided via a monitor, this could cause distraction of the user while driving, thus increasing the risk of having an accident. This becomes even worse when the route is displayed on a map on the monitor. It is a problem for the user of the device.
   - Should the navigator incorporate a monitor to be mounted in the dashboard, the installation of the navigator becomes more complex and costly.
   - When using locally synthesised voice, different product versions are required for each country in which it is going to be marketed, which represents a problem for the commercialisation of the product.
   - Synthesised voice can be impersonal and cause user discomfort.
* *Problems related to the way of obtaining the geographical information from a remote centre:*
   - A provider for digitised cartography systems or digitised routes to the end user is needed; the provider should further operate the navigation service as well. This complicates the deployment and the business model, possibly increasing price for the end user.
* *Problems related* to *the way of to communication with the remote centre:*
   - The fact that the communication device is integrated in the navigator implies the existence of a subscription and telephone number being exclusively related to the navigation device. Also, said telephony device generates traffic that has to be paid to a mobile phone network operator. Who pays for that 'special' subscription? Who pays for the generated traffic? Should the final user pay for it, that would mean an inconvenience for the end user, because this would probably duplicate the user's telephone subscriptions. Should a third party pay for it, then the figure of a provider of navigation services would appear, complicating the deployment and business model.
   - The fact that the communication device is integrated in the navigator notably increases the cost of the navigation device, which is reflected in the price paid by the end user.

### DESCRIPTION OF THE INVENTION

A first aspect of the invention corresponds to a navigation device, that comprises:
Means for obtaining information regarding a geographical location of the device (these means can comprise, for example, a GPS, GALILEO and/or GLONASS positioning device that provides said information and that could additionally be complemented with one or more inertial devices such as a speedometers and/or accelerometers and/or gyroscopes and/or compasses, etc.; the information could consist of a series of co-ordinates that define a position in a reference system);
communication means, that comprise:
   - radio communication means for communication with a user's mobile telephone (preferably a cellular telephone);
   - information transmission means configured to send, as a response to an activation action, the information regarding the geographical location to a remote centre (telephony attention centre or "call centre") by means of said radio communication means and through said mobile telephone;
   - means for establishing, as a response to an activation action, a voice communication channel ("voice channel") with the remote centre, by means of said radio communication means and through said mobile telephone;
   - means for reception of voice messages through said voice channel and means for audible presentation of said voice messages via a loudspeaker.

The device can include at least one memory so that it continuously, periodically or when commanded by the control system of the device, can store updated information regarding the location of the device. Additionally or alternatively, this memory can store data such as a telephone number and/or IP address (internet address) of the remote centre.

Further, the communication means can comprise means for reception of voice messages via a microphone and means for transmission of said voice messages to the remote centre through the voice channel.

The information transmission means can be configured to send information regarding the geographical location to the remote centre from a mobile telephone by means of a short message (SM), by means of a USSD message or by means of a data communication channel established in a GPRS session.

The communication means can be configured to establish: 1) a data transmission channel to send information regarding the geographic location; and 2) the voice communication channel; as a response to the same activation action (there also exists the possibility of having different types of activation actions, for example, represented by two different pushbuttons, to send location related data and to establish the voice communication channel, respectively).

The radio communication means can consist of short range radio communication means in an ISM band, for example, in the bands allocated for that purpose in the 2.4GHz and 5.8GHz frequencies. The radio communication means can consist of Bluetooth communication means. In that case, the radio communication means include at least one Bluetooth transceiver device able to communicate with (and to command, at least partially) at least one Bluetooth enabled mobile telephone in its area of coverage.

The device can also include a pushbutton activator, to be pushed in order to initiate a session with the remote centre.

A second aspect of the invention corresponds to a vehicle, for example, a car, that incorporates a device according to the invention.

A third aspect of the invention corresponds to a navigation method that comprises the following steps:
- obtaining information regarding the geographical location of a navigation device and storing said information, at least temporally, in said navigation device (this step can be performed continuously, periodically or just as aresponse to an activation action, for example, when a pushbutton is pushed);
- as a response to an activation action, sending the information regarding the geographical location from the navigation device to a remote centre by means of a data communication channel that comprises a first section corresponding to a radio connection between the navigation device and a mobile telephone of the user, and a second section that comprises a mobile telephony connection between the mobile telephone and the remote centre;
- receiving voice messages from the remote centre, by means of a voice channel that comprises a first section that comprises a mobile telephony connection between the remote centre and the mobile telephone, and a second section corresponding to a radio connection between the mobile telephone and the navigation device (this voice channel can also be used to send voice messages from the user to the remote centre);
- presenting the voice messages to the user by means of a loudspeaker.

The activation action can consist of pushing a pushbutton.

The information regarding the geographical location can be sent to the remote centre by means of a short message (SM) from the mobile telephone, by means of a USSD message from the mobile telephone o by means of a data communication channel established in a GPRS session, from the mobile telephone.

The radio connection can be a short range radio connection in a ISM band, for example, a Bluetooth connection.

Should it not be possible to establish the radio connection (for example, if there are no mobile telephones available with radio communication ability (for example, Bluetooth) with the device or if the available telephones cannot for any reason establish a radio connection with the device), this can be indicated to the user by means of an error signal or similar.

The mobile telephone can establish a connection with the remote centre by means of a regular call to a telephone number or by means of a connection to an Internet server with a certain IP address or with a known domain name.

When the remote centre answers the call, two stable communication channels (physical or virtual) can be established through the mobile telephone of the user, that acts as a connecting bridge, between the called remote centre and the navigation device, one channel for voice reception and transmission (voice channel) and another channel for data reception and transmission (for example, if the mobile telephone uses GPRS technology, two different physical communication channels can be established towards the same remote call centre; if no GPRS is used a voice channel with the remote centre can be established and, simultaneously, a short message (SM) or a USSD message can be sent to the same remote centre, considering the latter as a data transmission and reception channel).

Through the voice channel, it is possible to establish a stable communication channel with an operator (human or automated) at the called remote centre. This way, the user can hear and talk to the operator at the remote centre for customer support, in a continuos fashion.

The sending of the information regarding the position to the remote centre can be performed at the moment the communication is established, periodically, on request of the user of the navigation device or on request, through the data or voice channel, of the remote centre.

This way, two permanent communication channels can be established between the user of the navigation device and the remote centre. One for voice, by means of which the user will be able to communicate with the remote centre, and another for data, by means of which the navigation device will be able to send its location in one, or several, specific instants as well as to receive orders from the remote centre.

Once the communication subject is terminated, or anytime any of both parties would want it so, the channels can be released and communication between the parties is stopped, returning the navigation device to its initial state.

Thus, the invention works in co-operation with a remote centre for personal or automated attention ("call centre"), to which calls from the navigation device are generated.

The function of the remote centre is to provide the user of the navigation device with information through the voice channel, either via a human or automated operator, depending on the co-ordinates where the user is located at that specific moment. Coordinates are received at the remote centre through the data channel.

The described invention solves, depending on the adopted method, some or all the previously commented problems:
- The route is provided via the operator's voice, which allows the user not to loose attention to the steering wheel and the road, considerably decreasing the risk for accidents.
- The installation of the navigator is simplified and it becomes cheaper since the number of devices to be installed in the car dashboard is decreased, and the complexity of those devices is reduced.
- Being an operator attended service, the product version is independent on the country in which it is to be used, which significantly facilitates the business model and the manufacturing of the device.
- The used voice is human and, thus, generally better accepted by the user.
- As digitised cartographic information is not necessary for the end user system, the business model is simplified because the user does not need to contract a service exclusively for this.
- By means of this invention, any information transaction is performed through the mobile telephone of the user, using its regular telephone subscription. This way the number of intermediaries in the business value chain is minimised, simplifying significantly commercial deployment and billing; besides, costs for the final user can also significantly decrease.
- As no remote network communication module is included, but instead a radio module (preferably short range radio, preferably Bluetooth), cost of the navigation device is considerably reduced.

### BRIEF DESCRIPTION OF THE DRAWINGS

Next, we will very briefly describe a series of drawings that will help understanding the invention better and which are expressly related to one embodiment of said invention, presented just as an illustrative, but not limiting, example of the latter.

Figure 1 is a block diagram that depicts, in an schematic way, the different functional modules according to a preferred embodiment of the invention.

Figure 2 is a block diagram that depicts the most important different physical elements that integrate a system according to a preferred embodiment of the invention.

Figure 3 is a diagram that represents, in an schematic way, a series of operations performed according to a preferred embodiment of the invention.

### DESCRIPTION OF A PREFERRED EMBODIMENT OF THE INVENTION

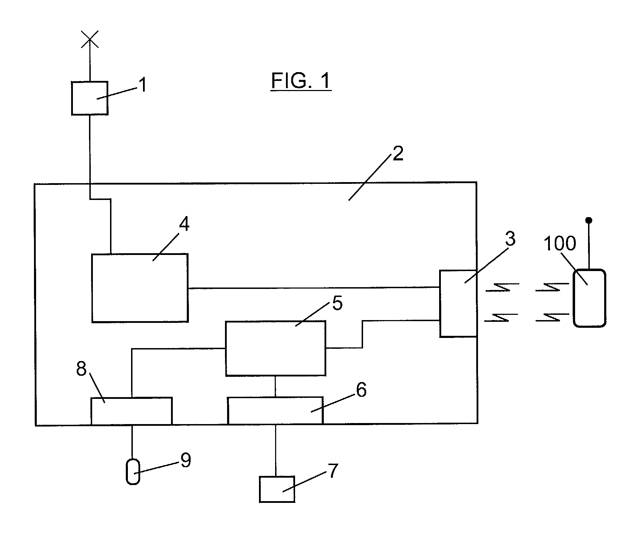

**Figure 1** depicts in an schematic way how a navigation device according to a preferred embodiment of the invention, comprises:
- means (1) for obtaining information regarding a geographical location of the device (for example, a GPS module and its corresponding antenna);
- means (2) for communication, that comprise:

- means (3) for radio communication (preferably, for Bluetooth communication) with a cellular mobile telephone (100) of a user;
- means (4) for sending information configured to send to a remote centre, as a response to an activation action (for example, as a a response to pushing a pushbutton), the information regarding the geographical location, by means of said means (3) for radio communication and through said mobile telephone (100);
- means (5) for establishing, as a response to an activation action (for example, as a response to the same pushing of a pushbutton mentioned above), a voice channel with the remote centre, by means of said means (3) for radio communication and through said mobile telephone (100);
- means (6) for reception of voice messages through that voice channel and for presentation of those voice messages in an audible way via a loudspeaker (7); and
- means (8) for reception of voice messages through a microphone (9) and for sending those voice messages to the remote centre through the voice channel.

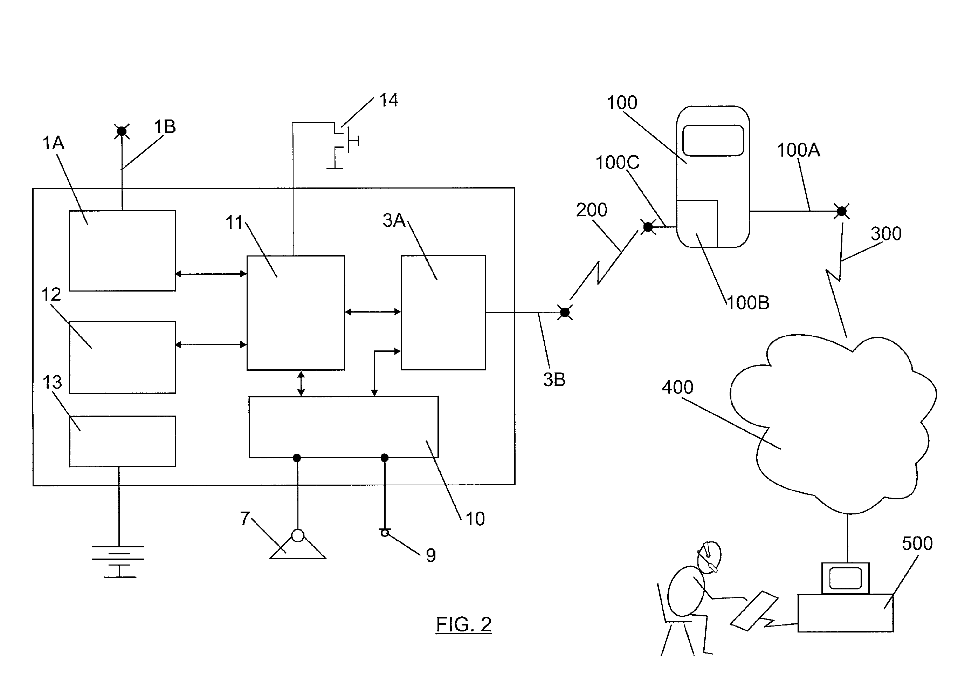

**Figure 2** depicts the main physical elements that integrate a device according to a preferred embodiment of the invention. In said figure, we can see how the means (1) for obtaining information regarding a geographical location comprise a GPS module (1A) and a GPS antenna (1B). The GPS module (1A) is connected to a main microprocessor (11) that, together with a memory (12), constitutes a substantial part of the means (4) for sending the information and of the means (5) for establishing a voice channel commented before. The remote centre number is stored in the memory and, preferably, the location obtained by means of the GPS module (1A) as well. Besides, the device comprises the radio communication means (3) integrated by a Bluetooth module (3A) with its corresponding Bluetooth antenna (3B), a circuitry for hands free (10) operation related to the loudspeaker (7) and the microphone (9), a power supply (13) (for example, of 12 V DC) and a pushbutton (14) the pushing of which constitutes the activation action. As it can be observed, the device can communicate with a user's mobile telephone (100) by means of a Bluetooth radio communication (200), since the mobile telephone (100) comprises a Bluetooth communication module (100B) and its corresponding Bluetooth antenna (100C). The mobile telephone also has a GSM antenna (100A). From the mobile telephone, it is possible to establish a communication (audio and data) (300) with the remote centre (500) ("call centre") through the GSM network (400).

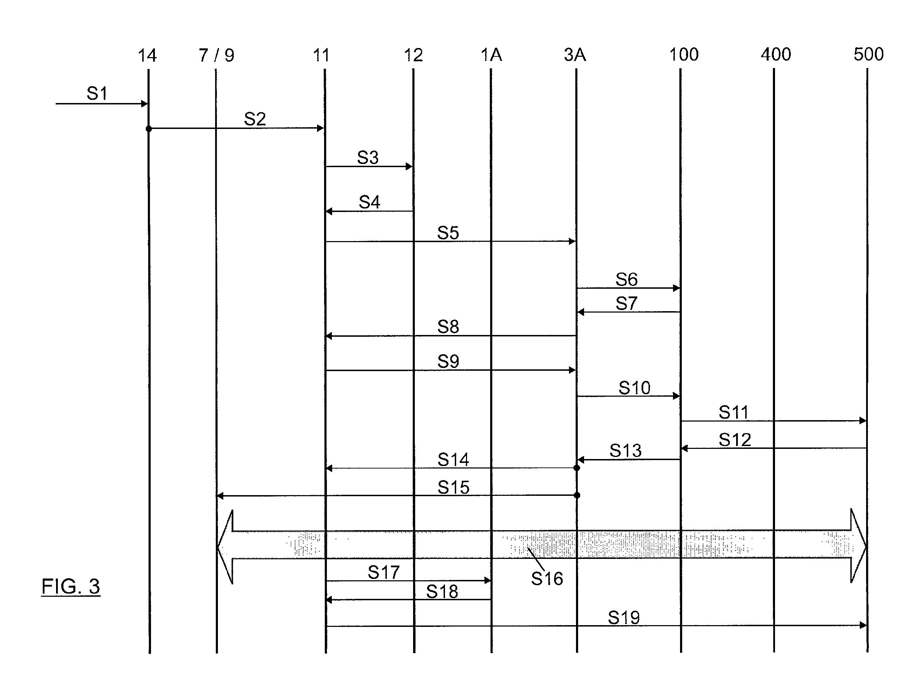

**Figure 3** illustrates, in an schematic way, the operations or principal steps the system performs as a response to pushing on the pushbutton (14).

S1: in this first step, the user pushes the pushbutton (14), which constitutes the "activation action".

S2: the pushbutton and its related circuits generate an activation signal that is received and interpreted in the main microprocessor (11).

S3: the main microprocessor (11) asks the memory (12) for the telephone number of the remote centre.

S4: the memory (12) sends the telephone number of the remote centre to the main microprocessor (11).

S5: the main microprocessor (11), that is communicated with the Bluetooth module (3A) of the device, sends to said Bluetooth module (3A) an order to establish a communication with the remote centre (500), through the mobile telephone (100) of the user.

S6: the Bluetooth module (3A) tries to contact the Bluetooth module (100B) in the mobile telephone (100), in order to test that the telephone is available.

S7: the Bluetooth module (100B) in the mobile telephone of the user confirms its availability to the Bluetooth module (3A) in the navigation device.

S8: the Bluetooth module (3A) of the navigation device sends a confirmation message to the main microprocessor (11), confirming that an available mobile telephone, with Bluetooth communication capabilities, exists.

S9: the main microprocessor (11) sends the Bluetooth module (3A) a message, indicating that the Bluetooth module has to perform the necessary operations to place a telephone call to the remote centre (500) through the mobile telephone; in this operation, the microprocessor sends the Bluetooth module (3A) the telephone number of the remote centre, obtained from the memory (12) in the step S4.

S10: the Bluetooth module (3A) sends the corresponding instructions to the mobile telephone (100) (more precisely, to the Bluetooth module (100B) in the mobile telephone), together with the telephone number of the remote centre.

S11: the mobile telephone follows the instructions and places a call to the remote centre (500), through the GSM network (400).

S12: the remote centre sends a connection established confirmation message to the mobile telephone (100).

S13: the mobile telephone (100) communicates the confirmation message to the Bluetooth module (3A) of the navigation device.

S14: the Bluetooth module (3A) communicates the confirmation message to the main microprocessor (11).

S15: the Bluetooth module (3A) also initiates the necessary operations to establish a voice channel between the loudspeaker (7) and the microphone (9), on one hand, and the remote centre (500), on the other, through the hands-free circuitry (10).

S16: the channels for voice and data transmission between the device and the remote centre have been established.

S17: the main microprocessor (11) asks the GPS module (1A) for the current location.

S18: the GPS module sends the data corresponding to the current location to the main microprocessor (11).

S19: the main microprocessor sends the data corresponding to the current location to the remote centre (500), by means of said data transmission channel and through the mobile telephone (100) and the GSM network (400).

Once said data are received at the remote centre (500), an operator sends instructions to the user through the established voice channel.

According to an alternative embodiment, the device obtains (from the GPS module (1 A)) and stores (in the memory (12)), in a more or less continuos way, updated location information. In that case, when the activation action is generated (step S1), updated location information is already available in the memory (12); in that case, the system can skip steps S17-S18 and obtain location data in step S3, together with the telephone number of the remote centre.

The communication (200) between the navigation device and the mobile telephone (100) begins with the establishment of a Bluetooth radio connection between the navigation device and the mobile telephone (100). Over said connection a virtual serial port emulation (RFCOMM) is started up activating, at the same time and in both sides, the functionality corresponding to the standard Bluetooth profile for hands-free operation or "Hands-Free Profile" (HFP) ("Specification of the Bluetooth System; Profiles: Hands-Free Profile") or similar.

This functionality will make possible:
1.- To make a call from the mobile telephone (100) to a telephone number, in this case, pre-programmed in the memory (12) of the navigation device and corresponding to the remote centre (500). This will be implemented by using the AT command(s) specified in the HFP for this purpose, and which will be transported over the virtual serial port mentioned before.
2.- Inherently to the HFP functionality, automatically, a bi-directional audio communication is established between the navigation device and the mobile telephone (100), that will allow the navigation device to be used as a hands-free device during the subsequent telephone conversation, once this has been established.
3.- When applicable, to terminate the established call. This will be implemented by using the AT command(s) specified in the HFP for this purpose, and which will be transported over the virtual serial port mentioned before.

Should it be not possible to establish a simultaneous voice and data connection via GPRS through the mobile telephone (100) of the user, taking advantage of the existing virtual serial port, and in parallel to the established telephone conversation, current navigation device location data provided by the GPS module (1A) can be sent, in a continuos way, to the remote centre (500), via a short message (SM) or a USSD message according to what it is most convenient. This will be possible by using certain AT commands specified in the GSM 07.07 and/or GSM 07.05 standards (ETS 100 916, "Digital cellular telecommunications system (Phase 2+); AT command set for GSM Mobile Equipment (ME) (GSM 07.07 version 7.5.0)"; ETS 100 585, "Digital cellular telecommunications system (Phase 2+); Use of Data Terminal Equipment - Data Circuit Terminating Equipment (DTE - DCE) interface for Short Message Service (SMS) and Cell Broadcast Service (CBS) (GSM 07.05 version 7.0.1 )") depending on the case; this will have to be implemented, both in the navigation device and the mobile telephone, as an extension to the currently available functionality in the HFP.

Should a simultaneous voice and data connection via GPRS through the user mobile telephone be possible and should this method be desired to be used to send the location data, coincident to the establishment of the telephone connection mentioned before, the standard Bluetooth profile for "Dial up networking" (DuN) or similar will be started up. This will open a new data channel over the Bluetooth interface, based on a second virtual serial port, which related as well to a GPRS data channel in the mobile telephone (100), will allow location data transmission to the remote centre. It is assumed that the navigation device has the IP address or domain name corresponding to said remote centre (500) stored, data that will be used when establishing the mentioned connection using GPRS.

The invention (or one variant of the same) could be used, for example, for human operator assisted car navigation. For example:
- We suppose the user is lost in an unknown city, wanting to reach a certain destination. He pushes a pushbutton (14) in the steering wheel, that is connected to a navigation device installed in the glove compartment and connected to the music loudspeaker (7) and to a microphone (9) close to the driver's mouth.
- Said user has got a GPRS mobile telephone (100) with Bluetooth capabilities, synchronised with the navigation device.
- The navigation device, by means of a Bluetooth channel, generates a call through the user's GPRS mobile telephone to a remote centre (500) for customer support (for example, in the Spanish case, by means of a 906 telephonic attention number).
- The voice call is generated through a GSM channel (or through a GPRS channel should voice over IP Technology be used, through Internet). At the customer support centre, one operator picks up the phone and gets into direct contact with the user of the navigator via the microphone and loudspeaker system to which the navigation device is connected.
- By means of a data communication channel established in a GPRS session - or by means of short messages (SMs), USSDs, etc.- the location where the car is located at that instant is sent, by means of a pre-defined protocol, to the remote centre (500).
- The operator has a computer with digitised cartographic information, that receives through the data channel the location of the user and displays it on a map on the monitor. This way the operator knows where the user is located at that moment.
- The user indicates (through the voice channel) to the operator in the remote centre what is the destination he wants to reach and the operator visualises (or can visualise) the location where the car is located at every moment and guide the user until his/her final destination.

Logically, the invention can also be applied to other services (for example, placing emergency calls, etc.) and other vehicles and not only to cars (it can be used for pedestrians, other vehicles, etc.).

The materials, size, shape and disposition of the elements can be subject to variation, given that this will not imply an alteration of the basic concept of the invention.

Through the present description and claims the word "comprise" or variations of the same, such as "comprising", do not pretend to exclude other steps or components.

## Claims

1. A navigation device, that comprises:
- means (1) for obtaining information regarding a geographical location of the device;
- means (2) for communication, that comprise:
- means (3) for radio communication with a mobile telephone (100) of a user;
- means (4) for sending information, configured to send to a remote centre (500), as a response to an activation action, the information regarding the geographical location, by means of said means (3) for radio communication and through said mobile telephone (100);
- means (5) for establishing, as a response to an activation action, a voice channel with the remote centre (500), by means of said means (3) for radio communication and through said mobile telephone (100);
- means (6) for reception of voice messages through said voice channel and for presentation of said voice messages in an audible way via a loudspeaker (7).

2. A device according to claim 1, **characterised in that** the means (2) for communication also comprise means (8) for reception of voice messages through a microphone (9) and for sending said voice messages to the remote centre through the voice channel.

3. A device according to any preceding claim, **characterised in that** the means (1) for obtaining the information regarding a geographical location of the device comprise a GPS and/or GALILEO and/or GLONASS positioning device.

4. A device according to any preceding claim, **characterised in that** the means (4) for sending information are configured to send the information regarding the geographical location to the remote centre by means of a short message (SM) from the mobile telephone (100).

5. A device according to any of claims 1-3, **characterised in that** the means (4) for sending the information are configured to send the information regarding the geographical location to the remote centre by means of a USSD message from the mobile telephone (100).

6. A device according to any of claims 1-3, **characterised in that** the means (4) for sending the information are configured to send the information regarding the geographical location to the remote centre by means of data communication channel established in a GPRS session, from the mobile telephone (100).

7. A device according to any preceding claim, **characterised in that** the means (2) for communication are configured to establish: 1) a data transmission channel for sending information regarding the geographical location; and 2) the voice channel, as a response to the same activation action.

8. A device according to any preceding claim, **characterised in that** the means (3) for radio communication consist of radio communication means in an ISM band.

9. A device according to any preceding claim, **characterised in that** the means (3) for radio communication consist of Bluetooth communication means.

10. A vehicle with a navigation device, **characterised in that** the vehicle incorporates a device according to any of claims 1-9.

11. A navigation method, comprising the following steps:
- obtaining information regarding a geographical location of a navigation device and storing said information, at least temporarily, in said navigation device;
- as a response to an activation action, sending the information regarding the geographical position from the navigation device to a remote centre (500) through a data communication channel that comprises a first section corresponding to a radio connection between the navigation device and a mobile telephone (100) of a user, and a second section that comprises a mobile telephony connection between the mobile telephone (100) and the remote centre;
- receiving voice messages from the remote centre, through a voice channel that comprises a first section that comprises a mobile telephony connection between the remote centre and the mobile telephone (100), and a second section corresponding to a, radio connection between the mobile telephone (100) and the navigation device;
- presenting the voice messages to the user by means of a loudspeaker (7).

12. A method according to claim 11, **characterised in that** the information regarding the geographical location is sent to the remote centre by means of a short message (SM) from the mobile telephone (100), by means of a USSD message from the mobile telephone (100) or by means of a data communication channel established in a GPRS session, from the mobile telephone (100).

13. A method according to any of claims 11 and 12, **characterised in that** the activation action comprises pushing a pushbutton (14).

14. A method according to any of claims 11-13, **characterised in that** the radio connection is a radio connection in an ISM band.

15. A method according to any of claims 11-14, **characterised in that** the radio connection is a Bluetooth connection (200).
